# EUROPEAN PATENT APPLICATION

(11) **EP 4 044 015 A1**
(43) Date of publication of application: **17.08.2022**
(21) Application number: 20883072.9
(22) Date of filing: 02.09.2020
(51) Int. Cl.: G06F 3/06

(54) **DATA PROCESSING METHOD AND APPARATUS**

(30) Priority: 31.10.2019 CN 201911074240
(71) Applicant: Huawei Technologies Co., Ltd., Shenzhen, Guangdong 518129 (CN)
(72) Inventor: FANG, Wei, Shenzhen, Guangdong 518129 (CN); MIAO, Xie, Shenzhen, Guangdong 518129 (CN); GAO, Xiang, Shenzhen, Guangdong 518129 (CN); ZHAO, Hongjiang, Shenzhen, Guangdong 518129 (CN); TANG, Xu, Shenzhen, Guangdong 518129 (CN)
(74) Representative: Gill Jennings & Every LLP
(86) International application number: PCT/CN2020/113103
(87) International publication number: WO 2021/082720

(57) **Abstract**

Embodiments of this application disclose a data processing method and apparatus, and relate to the field of electronic devices. Without adding an additional storage device, a response time of each write request can be shortened, and an execution time of an entire sequence preserving action can be shortened. A specific solution is: receiving a write request, where the write request is for requesting to write, to an external memory, first data in a first storage area in an internal memory; writing the first data to a second storage area in the internal memory, where the second storage area is a storage area, in the internal memory, that is reallocated to the first data, and the second storage area is different from the first storage area; sending a response message after the first data is written to the second storage area, where the response message indicates that processing of the write request is completed; and writing the first data in the second storage area to the external memory.

## Description

This application claims priority to Chinese Patent Application No. 201911074240.5, filed with the China National Intellectual Property Administration on October 31, 2019 and entitled "DATA PROCESSING METHOD AND APPARATUS", which is incorporated herein by reference in its entirety.

### TECHNICAL FIELD

Embodiments of this application relate to the field of electronic devices, and in particular, to a data processing method and apparatus.

### BACKGROUND

Various functions of an electronic device are implemented by running applications. In a running process of an application, a large quantity of data update operations are performed. For example, in a running process of an application, a processor of an electronic device may write key data in the running process to an external storage component (referred to as an external memory for short in the following) in a specific sequence, to implement data updating. The operation of writing a plurality of pieces of key data to the external memory in a specific sequence may be referred to as a sequence preserving action. It may be understood that the sequence preserving action includes processing the plurality of pieces of key data, and processing of one of the pieces of key data, namely, an operation for writing the key data to the external memory, may be referred to as writing data to disk. The processor of the electronic device may actively call a data synchronization interface (for example, fsync/sync) to write data to disk. For example, the processor of the electronic device may flush, to a cache of the external memory through the fsync/sync interface, key data that is in an internal memory of the electronic device and that needs to be written to disk, and then the processor of the electronic device delivers a flush (flush) command to the external memory to indicate the external memory to transfer, to a non-volatile storage medium, the key data that is in the cache and that needs to be written to disk, to complete writing data to disk. After one of the plurality of pieces of key data has been written to disk, the processor of the electronic device may perform the foregoing operations on a next piece of key data in sequence, to sequentially write the key data to disk. For example, when the application needs to update the plurality of pieces of data to the external memory, for each piece of data in the plurality of pieces of data, the application may deliver a write request to the external memory by using the processor of the electronic device, to implement an update operation of writing data corresponding to the write request from the internal memory to the external memory. After writing data to disk is completed according to one write request, the application receives a message indicating that the write request has been executed, and then the application may continue to deliver another request (for example, a write request for writing another piece of data to the external memory). The foregoing process is repeated, so that the electronic device may complete, by delivering a plurality of write requests, an operation of writing the plurality of pieces of key data to the external memory in the sequence preserving action.

Usually, an external memory bandwidth is significantly lower than an internal memory bandwidth of the electronic device. Therefore, a process of writing key data to disk (for example, including a flush process, a process of delivering a flush command, and a process of transferring the key data from the cache to the non-volatile storage medium by the external memory) may consume a long time due to a lack of the external memory bandwidth. Currently, most external memories are common low-speed storage media. Because a processing speed of a low-speed storage medium is relatively slow, time that is consumed by a process of writing data to disk is further increased. In some scenarios, when an amount of data submitted by the processor is large and the external memory bandwidth is small, the time that is consumed by the process of writing data to disk may reach 1 second or more. As a part of the sequence preserving action, a next write request that needs to be executed after the key data is written to disk in sequence also waits for a long time because the process of writing the key data to disk consumes an excessively long time, and therefore, execution of the entire sequence preserving action consumes an excessively long time.

### SUMMARY

Embodiments of this application provide a data processing method and apparatus. Without adding an additional storage device, a response time of each write request can be shortened, and an execution time of an entire sequence preserving action can be shortened.

The following technical solutions are used in this application.

According to a first aspect, an embodiment of this application provides a data processing method. The method may be applied to a processor, and the method includes: receiving a write request, where the write request is for requesting to write, to an external memory, first data in a first storage area in an internal memory; writing the first data to a second storage area in the internal memory, where the second storage area is a storage area, in the internal memory, that is reallocated to the first data, and the second storage area is different from the first storage area; sending a response message after the first data is written to the second storage area, where the response message indicates that processing of the write request is completed; and writing the first data in the second storage area to the external memory.

Based on the method, for a write request delivered by an application, after first data corresponding to the write request is written to a second storage area in the internal memory that is allocated to the first data, a message indicating that the processing of the write request is completed may be sent, so that the application continues to deliver another request. The second storage area is a storage area in the internal memory that is reallocated to the first data. Therefore, time consumed for writing the first data to the second storage area is significantly less than time consumed for writing the first data to the external memory. Therefore, a response time of each write request can be shortened, so that the application may deliver another request more quickly, thereby shortening an execution time of an entire sequence preserving action.

In a possible design, after the writing the first data to a second storage area in the internal memory, the method further includes: adding the write request to a first transaction, where the first transaction is a transaction allocated after a first flush command is received and before a second flush (flush) command is received, the first flush command is a flush command last received before the write request, and the second flush command is a flush command first received after the write request. The writing the first data in the second storage area to the external memory includes: writing data corresponding to all write requests in the first transaction to the external memory, where the data corresponding to all the write requests in the first transaction includes the first data. Based on the method, one transaction is determined by using two adjacent flush commands, a write request and corresponding data are managed in a form of transactions, and data is written to the external memory in a form of transactions, thereby ensuring that consistency of data is not damaged when the second storage area is disposed in the internal memory.

In a possible design, the writing data corresponding to all write requests in the first transaction to the external memory includes: combining the first data and data that is in the data corresponding to all the write requests included in the first transaction and whose current storage address is adjacent to a current storage address of the first data, and writing combined data to the external memory. Based on the method, data with adjacent addresses is combined and written to the external memory, thereby increasing an average data size of an IO in a process of writing data to the external memory, improving system utilization, and improving a system life.

In a possible design, the writing the first data in the second storage area to the external memory includes: writing the first data in the second storage area to the external memory by using an asynchronous writeback thread. Based on the method, data is written to the external memory by using an asynchronous writeback thread that runs in a background, so that it is ensured that data falls into a non-volatile storage medium, and resources of another thread that runs in the foreground are not preempted, thereby reducing a risk of system stalling, and improving utilization of the system during an idle time of the system.

In a possible design, the method further includes: writing data corresponding to all write requests in a second transaction to the external memory after the writing data corresponding to all write requests in the first transaction to the external memory. The second transaction is a transaction allocated after the second flush command is received and before a third flush command is received, and the third flush command is a flush command first received after the second flush command is received. Based on the method, transactions are divided based on a flush command, so that it can be ensured that consistency of data in each transaction in a file system is not damaged.

According to a second aspect, a processor is provided and is applied to a data processing system. The data processing system further includes an internal memory and an external memory. The processor includes a receiving unit, a processing unit, and a sending unit. The receiving unit is configured to receive a write request, where the write request is for requesting to write, to the external memory, first data in a first storage area in the internal memory. The processing unit is configured to write the first data to a second storage area in the internal memory, where the second storage area is a storage area, in the internal memory, that is reallocated to the first data, and the second storage area is different from the first storage area. The sending unit is configured to send a response message after the first data is written to the second storage area, where the response message indicates that processing of the write request is completed. The processing unit is further configured to write the first data in the second storage area to the external memory.

In a possible design, the processing unit is further configured to add the write request to a first transaction, where the first transaction is a transaction allocated after a first flush command is received and before a second flush command is received, the first flush command is a flush command last received before the write request, and the second flush command is a flush command first received after the write request. That the processing unit is further configured to write the first data in the second storage area to the external memory includes: The processing unit is further configured to write data corresponding to all write requests in the first transaction to the external memory, where the data corresponding to all the write requests in the first transaction includes the first data.

In a possible design, that the processing unit is further configured to write data corresponding to all write requests in the first transaction to the external memory includes: The processing unit is further configured to: combine the first data and data that is in the data corresponding to all the write requests included in the first transaction and whose current storage address is adjacent to a current storage address of the first data, and write combined data to the external memory.

In a possible design, that the processing unit is further configured to write the first data in the second storage area to the external memory includes: the processing unit is further configured to write the first data in the second storage area to the external memory by using an asynchronous writeback thread.

In a possible design, the processing unit is further configured to write data corresponding to all write requests in a second transaction to the external memory after the data corresponding to all the write requests in the first transaction is written to the external memory. The second transaction is a transaction allocated after the second flush command is received and before a third flush command is received, and the third flush command is a flush command first received after the second flush command is received.

According to a third aspect, a data processing system is provided. The system includes a processor, a memory, and an external memory, and the processor is configured to perform some or all of the steps of the method in any one of the first aspect or the possible implementations of the first aspect. The processing system may be a computer system. Specifically, the computer system may be a terminal device, for example, a smartphone, a tablet computer, a desktop computer, a laptop computer, a handheld computer, a notebook computer, an ultra-mobile personal computer, a netbook, a cellular phone, a personal digital assistant, an augmented reality device or a virtual reality device, and a wearable device.

According to a fourth aspect, a computer-readable storage medium is provided. The computer-readable storage medium stores instructions; and when the instructions are run on a computer, the computer is enabled to perform the method in any one of the first aspect or the possible implementations of the first aspect. In some embodiments, the computer-readable storage medium is a non-volatile storage medium.

According to a fifth aspect, a computer program product is provided, and when running on a computer, the computer program product enables the method in any one of the first aspect or the possible implementations of the first aspect to be performed.

According to a sixth aspect, a processor is provided. The processor is coupled to a memory, and when executing a computer program or an instruction in the memory, the processor enables the method in any one of the first aspect or the possible implementations of the first aspect to be performed.

According to a seventh aspect, a chip is provided, including a processing circuit and an interface. The processing circuit is configured to invoke, from a storage medium, a computer program stored in the storage medium; and run the computer program stored in the storage medium, to perform the steps performed by the processor in any one of the first aspect or the possible implementations of the first aspect.

According to an eighth aspect, a data processing apparatus is provided. The apparatus includes a processor and a memory. The memory stores instructions, and the processor is configured to invoke the instructions to perform the steps performed by the processor in any one of the first aspect or the possible implementations of the first aspect.

It should be understood that for beneficial effects of any processor, data processing system, computer-readable storage medium, computer program product, chip, and data processing apparatus provided above, refer to beneficial effects of the method embodiments provided in the foregoing corresponding aspects. Details are not described herein again.

### BRIEF DESCRIPTION OF DRAWINGS

FIG. 1 is a schematic diagram of composition of a data processing system according to an embodiment of this application;
FIG. 2 is a schematic diagram of logical composition of a data processing system according to an embodiment of this application;
FIG. 3 is a schematic diagram of composition of an IO cache layer according to an embodiment of this application;
FIG. 4 is a schematic flowchart of a data processing method according to an embodiment of this application;
FIG. 5 is a schematic flowchart of another data processing method according to an embodiment of this application;
FIG. 6 is a schematic diagram of composition of a management of transactions list according to an embodiment of this application;
FIG. 7 is a schematic flowchart of performing a data processing method in a mobile phone according to an embodiment of this application; and
FIG. 8 is a schematic block diagram of a processor according to an embodiment of this application.

### DESCRIPTION OF EMBODIMENTS

In a running process of an electronic device, an application may initiate a write request for key data, to request the key data to be written to disk. For a plurality of write requests, that the electronic device performs write-data-to-disk processing on corresponding key data in sequence may be referred to as a sequence preserving action. Each write request cannot be initiated until key data requested by a previous write request is written to disk. However, limited by performance of an external memory, it may take a long time for the key data to be written to disk. Therefore, the application needs to wait a long time to initiate a next write request. This causes execution of the entire sequence preserving action to consume a very long time.

To resolve this problem, a bcache cache solution provided in the conventional technology may be used. In the bcache cache solution, a bcache layer needs to be disposed in the electronic device, and a high-speed storage component (for example, a solid-state storage medium) needs to be disposed to serve as a cache of the external memory. For example, when writing data to disk, the electronic device may first flush the data into the high-speed storage component by using the bcache layer, and then return a message, to the application that initiates the writing data to disk, indicating that current data has been written to disk, that is, return a message indicating that the corresponding write request has been executed. The application may initiate a next write request once the message is received. After the data is written to the high-speed storage component, the bcache layer may transfer, in a background, data in the high-speed storage component to the external memory in a sequence of writing data to the high-speed storage component, to finally complete writing the data to disk. It may be learned that, once data is written to the high-speed storage component, the application may initiate a next write request based on a received message indicating that the write request has been executed. In this way, a response time of the write request is shortened to a specific extent, and therefore, an execution time of the sequence preserving action is shortened.

It may be understood that, in the bcache cache solution, once data that needs to be written to disk is flushed to the external high-speed storage component, the application may be indicated to initiate a next write request. Even if the high-speed storage component has a higher write rate than that of a common external memory, the high-speed storage component is limited by a device bandwidth. Therefore, in a process of processing a large amount of data, when a device bandwidth is insufficient, a problem of a long execution time of the sequence preserving action still exists. In addition, because an external fast storage device needs to be disposed, complexity and costs of device composition are also increased.

This embodiment of this application provides a data processing method. After the application sends a write request that is for requesting to write data to disk, the processor may reallocate, for the write request, a storage area to data that needs to be written to disk in the internal memory. Once the data is stored in the reallocated storage area, the processor may return a response message to the application to indicate that write request processing is completed, so that the application continues to initiate a next write request. In this way, without adding an additional storage device, a response time of each write request can be shortened, thereby shortening an execution time of the entire sequence preserving action. Further, the processor may further migrate, to the external memory by using an asynchronous writeback thread, the data stored in the reallocated storage area, to complete writing data to disk, so that the data is migrated to and stored in the external memory when system resources are sufficient.

The following describes embodiments of this application in detail with reference to the accompanying drawings.

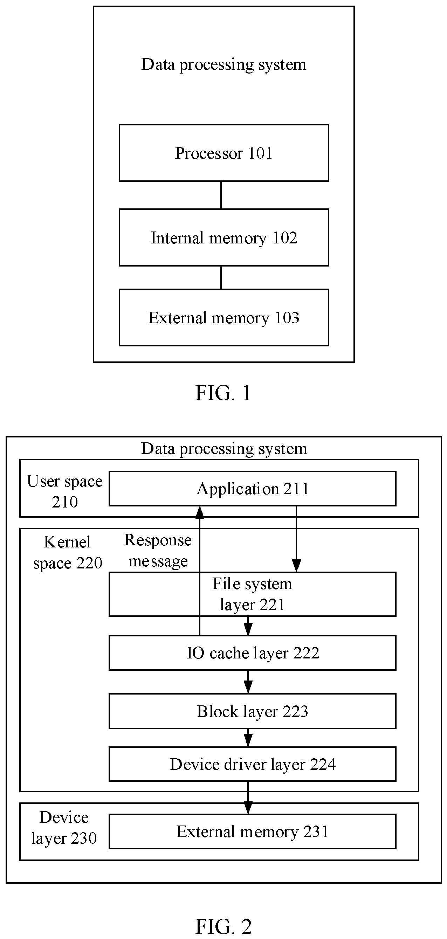

FIG. 1 is a schematic diagram of composition of a data processing system according to an embodiment of this application. As shown in FIG. 1, the data processing system may include a processor 101, an internal memory 102, and an external memory 103.

In this embodiment of this application, the processor 101 may be configured to receive a write request from an application, and may be further configured to process the write request.

The internal memory 102 may be configured to store executable program code, where the executable program code includes an instruction. The processor 101 performs various function applications and data processing of the data processing system by running the instruction stored in the internal memory 102. The internal memory 102 may further store data generated in a running process of the application, and the data may be key data that needs to be flushed to the external memory 103. In some embodiments, the internal memory 102 may include a high-speed random access memory, or may include a non-volatile memory, for example, at least one flash memory device or a universal flash storage (universal flash storage, UFS).

The external memory 103 may also be referred to as an external storage component, and may be a non-volatile memory. The processor 101 may communicate with the external memory 103 to implement data access. For example, the processor 101 may read data in the external memory 103, or write back key data in the internal memory 102 to the external memory 103. The non-volatile memory may be any machine readable and writeable medium that can store program code, for example, a multi-media card (Multi-Media Card, mmc), a floppy disk, a hard disk, a solid state disk (solid state disk, SSD), or an optical disc.

For example, the data processing method provided in embodiments of this application may be applied to the foregoing data processing system. For example, the processor 101 may receive a write request from an application, and the write request may be for requesting to write back, to the external memory 103, key data that is generated in an execution process of the application and that is stored in the internal memory 102. The processor 101 may write, based on the write request, corresponding key data to a storage area in the internal memory 102 that is temporarily allocated to the data, and return a completion message to the application that delivers the write request. The processor 101 may further initiate an asynchronous writeback thread, to migrate, to the external memory 103, data stored in the temporarily allocated storage area.

In this embodiment of this application, the processor 101, the internal memory 102, and the external memory 103 may be integrated into one device, for example, an electronic device. The processor 101, the internal memory 102, and the external memory 103 may also be located in different devices that are independent of each other. For example, the processor 101 and the internal memory 102 are integrated into one device, for example, a server, and the external memory 103 is independently disposed in one storage device and the server is communicatively connected to the storage device. A position relationship between the processor 101, the internal memory 102, and the external memory 103 is not limited in this embodiment of this application. The following embodiments are described by using an example in which the three are integrated into a same device, for example, all are disposed in one electronic device.

For example, the electronic device in this embodiment of this application may be a device on which an operating system is disposed, for example, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device or a virtual reality (virtual reality, VR) device, or a wearable device. A specific form of the device is not specifically limited in this embodiment of this application. The operating system may be a Linux, Windows, or another computer system.

An embodiment of this application further provides logical composition of a data processing system. Refer to FIG. 2. The data processing system may include a user space 210, a kernel space 220, and a device layer 230.

The user space 201 may include an application 211. The data processing system may implement various functions by running the application 211.

The kernel space 220 may include a file system layer 221, an input output cache (input output cache, IO cache) layer 222, a block layer (block layer) 223, and a device driver layer 224. The data processing system may process data by using layers in the kernel space 220, to support normal running of the application 211. For example, the file system layer 221 may be a Flash Friendly File System (Flash Friendly File System, f2fs). The IO cache layer 222 may be configured to process a write request initiated by the application. The device driver layer 224 may include an embedded multi-media card (Embedded Multi Media Card, eMMC) device driver, and may further include a universal flash storage (Universal Flash Storage, UFS) device driver and another storage device driver.

The device layer 230 may include an external memory 231. The external memory 231 may be the external memory 103 shown in FIG. 1, and may be configured to store various types of data.

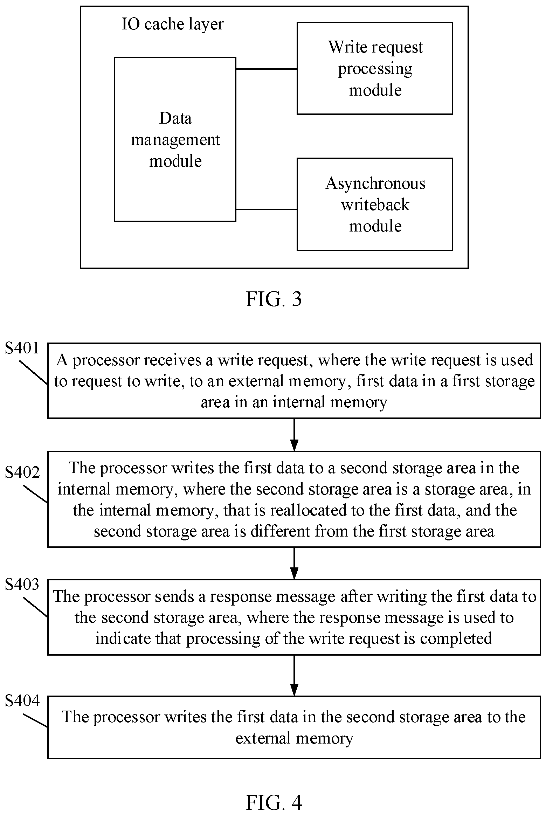

In this embodiment of this application, the IO cache layer 222 may include a plurality of modules, and the plurality of modules may cooperate to process the write request initiated by the application. As shown in FIG. 3, the IO cache layer 222 may include a write request processing module, a data management module, and an asynchronous writeback module. For example, the write request processing module may be configured to receive the write request initiated by the application, where the write request is for requesting to migrate, to the external memory 231, data in a first storage area that is in the internal memory. In some embodiments, the write request initiated by the application may be distributed to the write request processing module at the IO cache layer 222 via the file system layer 221. The write request processing module may write, to a storage area (for example, a second storage area) in the internal memory (for example, the internal memory 102 shown in FIG. 1) that is reallocated to the data, key data corresponding to the write request. The write request processing module may be further configured to send a response message to the application, to indicate that the processing of the write request is completed. The data management module may be configured to manage one or more pieces of data written to the second storage area. The asynchronous writeback module may be configured to migrate data in the second storage area to the external memory 231.

FIG. 4 is a schematic flowchart of a data processing method according to an embodiment of this application. The data processing method provided in this embodiment of this application may be implemented on the data processing system shown in FIG. 1 or FIG. 2. As described above, the data processing system may include a processor, an internal memory, and an external memory. The following describes in detail the data processing method provided in this embodiment of this application by using an example in which the processor, the internal memory, and the external memory are integrated into a same device, for example, the electronic device. As shown in FIG. 4, the data processing method may include S401 to S404.

S401: The processor receives a write request, where the write request is for requesting to write, to the external memory, first data in a first storage area in the internal memory.

Various applications may be installed in the electronic device. In a running process, an application generates some data, and the data is stored in the internal memory. In this embodiment of this application, an area, in the internal memory, in which the first data is stored when the first data is generated may be referred to as the first storage area. In the data, some key data needs to be migrated from the internal memory to the external memory. This process may also be referred to as a writeback process. When the writeback process needs to be executed, the application may initiate a write request to the processor, to indicate the processor to write back corresponding data to the external memory. For example, the write request may be an IO request that indicates writeback, for example, an fsync request or a sync request.

S402: The processor writes the first data to a second storage area in the internal memory, where the second storage area is a storage area, in the internal memory, that is reallocated to the first data, and the second storage area is different from the first storage area.

After receiving the write request initiated by the application for writing back the first data to the external memory, the processor may write the first data from the first storage area in the internal memory to another storage area (for example, the second storage area) in the internal memory. The second storage area may also be referred to as cache space of the IO cache layer.

In some embodiments, the second storage area, namely, the cache space of the IO cache layer, may be a storage area that the processor applies for, after receiving the write request, from the internal memory based on a size of data to be written to the cache space. For example, after receiving the write request that is delivered by the application and that indicates the first data to be written back, the processor may temporarily apply for a storage area for the first data in the internal memory based on a size of the first data, and store the first data in the temporarily applied storage area.

In some other embodiments, the second storage area, namely, the cache space of the IO cache layer, may be a fixed storage area in the internal memory. For example, a storage area with a fixed address segment in the internal memory may be set to cache space of the IO cache layer. After receiving the write request for writing back the first data delivered by the application, the processor may store the first data corresponding to the write request to the fixed storage area in the internal memory.

For example, with reference to FIG. 2, the write request initiated by the application in the user space may be first sent to the file system layer in the kernel space. After receiving the write request, the file system layer may deliver the write request to the IO cache layer. The IO cache layer may write the data (for example, the first data) corresponding to the write request to the second storage area of the internal memory, namely, the cache space of the IO cache layer.

The IO cache layer has composition shown in FIG. 3. That the IO cache layer writes the data (for example, the first data) corresponding to the write request to the cache space of the IO cache layer may be specifically: A write request processing module in the IO cache layer may receive the write request from the file system layer. The write request processing module may process the write request. For example, the first data corresponding to the write request is written to the second storage area of the internal memory from the first storage area in the internal memory, namely, the cache space of the IO cache layer. After the first data is written to the cache space of the IO cache layer, the first data may be uniformly managed by a data management module in the IO cache layer.

S403: The processor sends a response message after writing the first data to the second storage area, where the response message indicates that processing of the write request is completed.

Usually, the foregoing write request, namely, an IO request that indicates writeback, may be a synchronous write request, and the synchronous IO write request has a high priority in a main processing procedure, that is, the processor of the electronic device preferentially processes the IO request. For the application that delivers the IO request, a subsequent instruction can be executed only after the IO request is completed, for example, a next IO request that indicates writeback is delivered. In this embodiment, after writing the first data to the second storage area, the processor may return a response message to the application that indicates the first data to be written back, to indicate that the processing of the write request is completed. Then, the application may continue to deliver another write request. For example, after the IO request indicating to write back the first data is processed, the processor may return a response message to the application, for example, IO callback information, to indicate that the current IO request has been processed, and the application may deliver, after receiving the IO callback information, the next IO request that indicates writeback.

For example, with reference to FIG. 2, after writing the first data corresponding to the write request to the second storage area, the write request processing module in the IO cache layer may return a response message to the application that delivers the write request.

S404: The processor writes the first data in the second storage area to the external memory.

After the processor writes the first data to the second storage area, the processor may further write, to the external memory in a background, the first data stored in the second storage area, to complete writing the first data to disk.

For example, with reference to FIG. 2, an operation of writing the first data to the external memory may be completed by an asynchronous writeback module in the IO cache layer. For example, the asynchronous writeback module may write the first data to the external memory by using an asynchronous writeback thread.

In some embodiments, the asynchronous writeback module may immediately initiate, after the first data is written to the second storage area, the asynchronous writeback thread that is for writing the first data to the external memory, so that when the processor is idle, the first data may be immediately written to the external memory, thereby completing writing the first data to disk.

In some other embodiments, the asynchronous writeback module may alternatively initiate, based on a preset period, an asynchronous writeback thread that is for writing the first data to the external memory.

In some other implementations, the asynchronous writeback module may alternatively initiate an asynchronous writeback thread based on a specific trigger condition. The trigger condition may be that the first data is stored in the second storage area for preset duration. In this way, it can be ensured that the first data is not stored in the internal memory for an excessive period of time. The trigger condition may alternatively be that remaining unused space in the internal memory is less than a preset size. In this way, it can be ensured that the internal memory is not excessively occupied due to temporarily stored data.

It should be noted that when the second storage area, in other words, the cache space of the IO cache layer, includes data corresponding to a plurality of write requests, the asynchronous writeback module may write the data to the external memory one by one in a sequence of writing the data to the cache space.

In addition, when the application needs to read data, a corresponding read request may be delivered to the processor. In this embodiment, after receiving the read request, the processor may perform retrieval in the first storage area and the second storage area in the internal memory. If there is data to be read by using the read request, the data is directly returned to the application. If there is no data to be read by using the read request, the processor may initiate a read IO request to the external memory, to read the data to be read from a corresponding position in the external memory by using the read request, and return the read IO request to the application.

By using the foregoing technical solution, the data corresponding to the write request is written to the storage area in the internal memory that is reallocated to the data, so that a response message may be returned to the application after the data is written to the reallocated storage area. After receiving the response message, the application may initiate a next write request, without waiting until data is completely written to disk, thereby greatly shortening a response time of the write request. In addition, because the storage area reallocated to the data is also in the internal memory, writing of the data from one storage area to another storage area in the internal memory is not limited by a device bandwidth. In addition, the asynchronous writeback thread that can be executed in a background is for writing data to the external memory, and resources of a thread in a foreground do not need to be preempted, so that utilization of system resources is significantly improved.

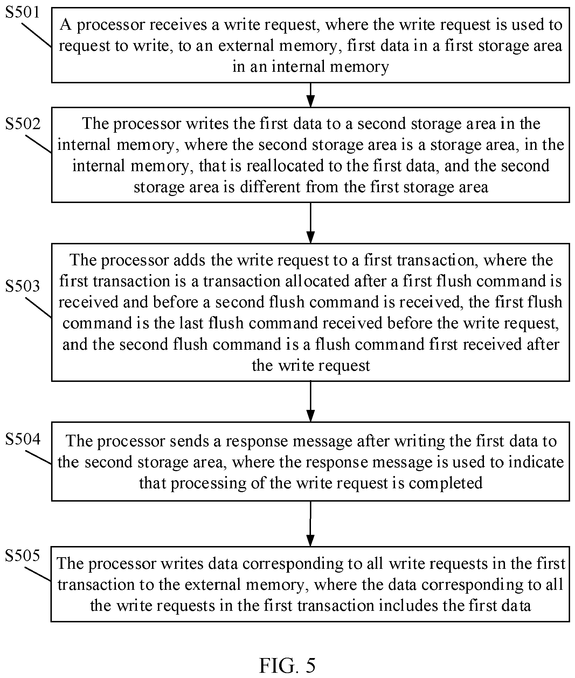

FIG. 5 is a schematic flowchart of another data processing method according to an embodiment of this application. Refer to FIG. 5. The method may include S501 to S505. The method may also be implemented on the data processing system shown in FIG. 1 or FIG. 2. As described above, the data processing system may include a processor, an internal memory, and an external memory. The following describes in detail the data processing method provided in this embodiment of this application by using an example in which the processor, the internal memory, and the external memory are integrated into a same device, for example, the electronic device.

S501: The processor receives a write request, where the write request is for requesting to write, to the external memory, first data in a first storage area in the internal memory.

S502: The processor writes the first data to a second storage area in the internal memory, where the second storage area is a storage area, in the internal memory, that is reallocated to the first data, and the second storage area is different from the first storage area.

S501 is the same as S401 in FIG. 4, and S502 is the same as S402 in FIG. 4. Details are not described herein again.

S503: The processor adds the write request to a first transaction. The first transaction is a transaction allocated after a first flush command is received and before a second flush command is received, the first flush command is a flush command last received before the write request, and the second flush command is a flush command first received after the write request.

In a running process, after receiving the foregoing response message of all data, of a file, that needs to be written back, the application may deliver a flush command to the processor, where the flush command indicates data corresponding to all write requests delivered before the flush command to be written to disk. For example, the application writes all data, of a file, that needs to be written back to the external memory, and usually initiates a plurality of write requests. In this embodiment, after data corresponding to each write request is written to the cache space of the IO cache layer, the processor returns a response message to the application, for example, the foregoing IO callback information, so that the application learns that the current write request has been executed. After receiving the IO callback information corresponding to the last group of data in all the data, of the file, that needs to be written back, the application may deliver a flush command to the processor, to indicate data corresponding to all write requests delivered before the flush command to be written to disk. The flush command may be delivered separately, or may be delivered together with a write request corresponding to the last group of data in all the data, of the file, that needs to be written back.

In this embodiment of this application, the processor may manage, based on the received flush command, the write request delivered by the application. For example, the processor may add a write request received between two consecutive flush commands to a same transaction for management.

For example, with reference to FIG. 2, as described in S402, after data corresponding to a write request, such as the first data, is written to the second storage area, the first data may be uniformly managed by the data management module. In this embodiment of this application, the data management module may include a management of transactions list, and the management of transactions list may perform unified management on a write request in a form of transactions, to implement unified management on the data corresponding to the write request. The management of transactions list may include one or more transactions. One transaction may include one or more write requests.

For example, with reference to FIG. 2, the application may need to initiate a plurality of write requests for all the data, of the file, that needs to be written back, to request to write all the data of the file to the external memory. The application may sequentially deliver the foregoing plurality of write requests to the kernel space. When the file system layer in the kernel space receives each of the plurality of write requests, the file system layer delivers the write request to the IO cache layer. After receiving the write request, the data management module in the IO cache layer may add the write request to a current transaction. In some embodiments, if the write request includes a flush command, it indicates that the data corresponding to the write request is the last group of data, in the file, that needs to be written back. After adding the write request to the current transaction, the data management module may end the transaction, and add the transaction to the management of transactions list. In some other embodiments, if the data management module receives the flush command after receiving the write request, it indicates that the data corresponding to the write request is the last group of data, in the file, that needs to be written back, the data management module ends the current transaction, and adds the transaction to the management of transactions list. In addition, after ending the current transaction, the data management module may further allocate a new transaction to manage a subsequently received write request.

S504: The processor sends a response message after writing the first data to the second storage area, where the response message indicates that processing of the write request is completed.

S504 is the same as S403 in FIG. 4, and details are not described herein again.

S505: The processor writes data corresponding to all write requests in the first transaction to the external memory, where the data corresponding to all the write requests in the first transaction includes the first data.

With reference to FIG. 2, similar to the description in the S404, the IO cache layer, for example, the asynchronous writeback module in the IO cache layer, may initiate an asynchronous writeback thread, and write the data in the cache space of the IO cache layer that is the second storage area to the external memory.

It may be understood that the file system includes information such as a file, a directory, an index, and space management (the information may also be referred to as metadata). At any time, it needs to be ensured that there is no conflict between these pieces of information (for example, data space indicated by a valid file needs to be identified as valid space in space management). If there is a conflict between the information, a severe problem, for example, a file loss or damage occurs. For example, that the file system updates file data is accompanied by updating of related metadata (such as index information and space management) of the file system. To ensure that consistency in the file system is not damaged, the metadata needs to be updated simultaneously. For example, the file system may ensure consistency of the metadata by generating a log, to be specific, the file system first assembles the metadata into complete verifiable data, writes the complete verifiable data to an independent address space (that is, generating the log), then delivers a flush command, and then updates the metadata in an original position. If a sudden power off (Sudden Power Off, SPO) occurs in a host, the data in the log is used for recovery. A data update sequence before and after the flush command cannot be damaged. If the data update sequence is damaged, a consistency problem is caused. Therefore, in this embodiment of this application, that the asynchronous writeback module in the IO cache layer initiates the asynchronous writeback thread, and write the data in the cache space of the IO cache layer that is the second storage area to the external memory may be specifically: The asynchronous writeback module may write, in a form of transactions, data corresponding to all write requests included in a transaction to the external memory, to ensure that data consistency is not damaged.

When the management of transactions list in the IO cache layer includes two or more transactions, the asynchronous writeback module may write, to the external memory based on a transaction generation sequence in a form of transactions, data corresponding to all write requests included in different transactions. When writing data corresponding to a write request in a transaction to the external memory, the asynchronous writeback module may write the data to the external memory in a sequence of writing the data corresponding to the write request in the transaction is saved to the cache space of the IO cache layer, or may not write the data to the external memory in the sequence. The following uses an example in which the asynchronous writeback module writes data in a transaction to the external memory in a sequence of saving the data in the transaction to the cache space of the IO cache layer.

In some embodiments, for data corresponding to all write requests in a transaction, the asynchronous writeback module may perform asynchronous writeback for each write request.

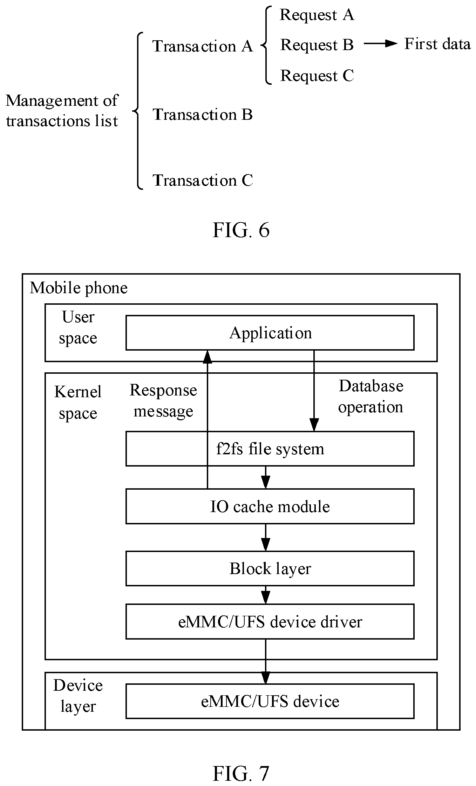

For example, as shown in FIG. 6, it is assumed that the management of transactions list includes three transactions, namely, a transaction A, a transaction B, and a transaction C. The transaction A includes three write requests, namely, a write request A, a write request B, and a write request C. A delivery time of the write request A is earlier than a delivery time of the write request B and is earlier than a delivery time of the write request C. The transaction A is generated earlier than the transaction B and is generated earlier than the transaction C.

A sequence in which the asynchronous writeback module initiates asynchronous writeback threads may be: an asynchronous writeback thread A, an asynchronous writeback thread B, and an asynchronous writeback thread C. The asynchronous writeback thread A is for writing data corresponding to the write request Ato the external memory, the asynchronous writeback thread B is for writing data corresponding to the write request B to the external memory, and the asynchronous writeback thread C is for writing data corresponding to the write request C to the external memory. After the asynchronous writeback thread C is completed, the asynchronous writeback module may initiate an asynchronous writeback thread for data corresponding to all write requests in the transaction B. Similarly, after the data corresponding to all the write requests in the transaction B is written to the external memory, the asynchronous writeback module may initiate an asynchronous writeback thread for data corresponding to write requests in the transaction C.

In other embodiments, for data corresponding to all write requests in the transaction, the asynchronous writeback module may alternatively combine the data corresponding to the write requests in the transaction before performing asynchronous writeback.

For example, the transaction is the first transaction. The asynchronous writeback module may combine the first data and data that is in the data corresponding to all the write requests included in the first transaction and whose current storage address is adjacent to a current storage address of the first data, and write combined data to the external memory.

For example, as shown in FIG. 6, still with reference to the foregoing example, data corresponding to the write request B in the transaction A is the first data. If the first data has a storage address adjacent to a storage address of data corresponding to the write request A, the data management module in the IO cache layer may combine the first data and the data corresponding to the write request A, and the asynchronous writeback module writes the first data and the data into a new write request and writes the new write request to the external memory by using an asynchronous writeback thread. If the first data has a storage address adjacent to a storage address of data corresponding to the write request C, the data management module may combine the first data and the data corresponding to the write request C, and the asynchronous writeback module writes the first data and the data into a new write request and writes the new write request to the external memory by using an asynchronous writeback thread. If the first data has a storage address not adjacent to the storage address of the data corresponding to each of the write request A and the write request C, the asynchronous writeback module may write the first data separately to the external memory by using the asynchronous writeback thread. Certainly, if the data corresponding to the write request A has a storage address adjacent to the storage address of the data corresponding to the write request C, the IO cache layer may combine the data corresponding to the write request A and the data corresponding to the write request C, and assemble the data into a new write request and write the new write request to the external memory by using asynchronous writeback.

The following describes a data processing method in embodiments with reference to FIG. 7 by using an example in which the data processing method provided in embodiments of this application is applied to an electronic device (for example, a mobile phone) that has an Android operating system, and a write request delivered by an application is used in a writeback scenario for data in a database.

As shown in FIG. 7, the application starts atomic write (Atomic Write) to change data in the database, that is, perform a database operation. In this case, a memory page on which the data is located is set to a dirty page (that is, set dirty). To store the data in the external memory, the application may initiate a synchronous write request to an f2fs file system, to indicate to write data corresponding to the synchronous write request to a non-volatile storage medium at a device layer (for example, an eMMC device or a UFS device) of the mobile phone. The f2fs file system receives the synchronization write request, and may deliver the synchronization write request to the IO cache layer. After receiving the synchronous write request, the IO cache layer may copy (copy) data corresponding to the synchronous write request to the cache space of the IO cache layer based on the steps shown in FIG. 4 or FIG. 5. The cache space of the IO cache layer is a storage area that is in the internal memory of the mobile phone and that is reallocated to the data corresponding to the synchronous write request. Then, the IO cache layer may return a response message to the application, to indicate that the current synchronous write request has been executed, and the application may continue to initiate a next synchronous write request.

After copying the data to the cache space, the IO cache layer may add the synchronization write request corresponding to the data to a current transaction for management. If a synchronization write request for writing back all dirty data (namely, the data on the foregoing dirty page) in the database has been initiated, the application may indicate the f2fs file system to deliver a flush command, to indicate all data before the flush command to be written to disk. Based on the received flush command, the IO cache layer ends the current transaction and adds the transaction to the management of transactions list for management.

The IO cache layer may initiate an asynchronous writeback thread according to a preset rule (for example, periodically triggering or triggering based on a free memory size), and combine, in a form of transactions, data corresponding to synchronous write requests in the transaction in a sequence of writing the data to the cache space and deliver the data to the eMMC or the UFS device, to complete writing data to disk.

By using the foregoing technical solution, the data corresponding to the write request is written to the storage area in the internal memory that is reallocated to the data, so that a response message may be returned to the application after the data is written to the reallocated storage area. After receiving the response message, the application may initiate a next write request, without waiting until data is completely written to disk, thereby greatly shortening a response time of the write request. In addition, because the storage area reallocated to the data is also in the internal memory, writing of the data from one storage area to another storage area in the internal memory is not limited by a device bandwidth. In addition, the asynchronous writeback thread that can be executed in a background is for writing data to the external memory, and resources of a thread in a foreground do not need to be preempted, so that utilization of system resources is significantly improved.

In addition, data in the cache space of the IO cache layer is uniformly managed in a form of transactions, and the data is written to the external memory in a form of transactions (that is, asynchronous writeback of data in a transaction is performed only after asynchronous writeback of all data of a previous transaction is completed), thereby effectively avoiding a problem that data consistency of a file system is damaged when an SPO occurs, and further avoiding a problem that the application is crashed because data consistency is damaged. In addition, data with adjacent addresses in the cache space is combined and written back, thereby effectively reducing a quantity of asynchronously written back IOs, and increasing an average data volume size for each IO, and significantly prolonging a life of the external memory.

The foregoing mainly describes the solutions provided in embodiments of this application from a perspective of the methods. To implement the foregoing functions, the solutions include corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the processor may be divided into functional modules based on the foregoing method example. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used.

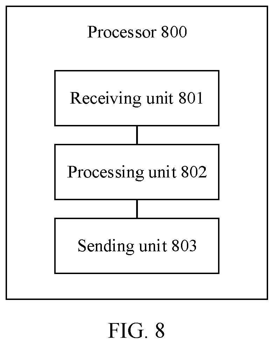

FIG. 8 is a schematic block diagram of a processor 800 according to an embodiment of this application. The processor 800 may be configured to perform any data processing method provided in this embodiment of this application, for example, the data processing method shown in FIG. 4 or FIG. 5.

As shown in FIG. 8, the processor 800 may include a receiving unit 801, a processing unit 802, and a sending unit 803.

The receiving unit 801 is configured to receive a write request, where the write request is for requesting to write, to an external memory, first data in a first storage area in an internal memory. For example, with reference to FIG. 4, the receiving unit 801 may be configured to perform S401, and with reference to FIG. 5, the receiving unit 801 may be configured to perform S501.

The processing unit 802 is configured to write the first data to a second storage area in the internal memory, where the second storage area is a storage area, in the internal memory, that is reallocated to the first data, and the second storage area is different from the first storage area. For example, with reference to FIG. 4, the processing unit 802 may be configured to perform S402. With reference to FIG. 5, the processing unit 802 may be configured to perform S502.

The sending unit 803 is configured to send a response message after the first data is written to the second storage area, where the response message indicates that processing of the write request is completed. For example, with reference to FIG. 4, the sending unit 803 may be configured to perform S403. With reference to FIG. 5, the sending unit 803 may be configured to perform S504.

The processing unit 802 is further configured to write the first data in the second storage area to the external memory. For example, with reference to FIG. 4, the processing unit 802 may be configured to perform S404. With reference to FIG. 5, the processing unit 802 may be configured to perform S505.

Optionally, the processing unit 802 is further configured to add the write request to a first transaction. The first transaction is a transaction allocated after a first flush command is received and before a second flush command is received, the first flush command is a flush command last received before the write request, and the second flush command is a flush command first received after the write request. For example, with reference to FIG. 5, the processing unit 802 may be configured to perform S503.

The processing unit 802 is further configured to write data corresponding to all write requests in the first transaction to the external memory, where the data corresponding to all the write requests in the first transaction includes the first data.

Optionally, the processing unit 802 is further configured to: combine the first data and data that is in the data corresponding to all the write requests included in the first transaction and whose current storage address is adjacent to a current storage address of the first data, and write combined data to the external memory.

Optionally, the processing unit 802 is further configured to write the first data in the second storage area to the external memory by using an asynchronous writeback thread.

Optionally, the processing unit 802 is further configured to write data corresponding to all write requests in a second transaction to the external memory after the data corresponding to all the write requests in the first transaction is written to the external memory. The second transaction is a transaction allocated after the second flush command is received and before a third flush command is received, and the third flush command is a flush command first received after the second flush command is received.

For descriptions of related content and beneficial effects of any processor 800 provided above, refer to the foregoing corresponding method embodiments. Details are not described herein again. In an example, the receiving unit 801 and the sending unit 803 may be implemented by using a pin or a circuit on a chip in which the processor is located.

An embodiment of this application further provides a data processing system. The processing system may be a computer system, the system includes any one of the foregoing processors, and the system further includes an internal memory and an external memory. The data processing system may process data according to the data processing method shown in FIG. 4 or FIG. 5.

A person of ordinary skill in the art may understand that all or some of the steps of the foregoing embodiments may be implemented by a program instructing related hardware. The foregoing program may be stored in a computer-readable storage medium. The foregoing storage medium may be a read-only memory, a random access memory, or the like. The processing unit or the processor may be a central processing unit, a general-purpose processor, an application-specific integrated circuit (application-specific integrated circuit, ASIC), a microprocessor), a field programmable gate array (field programmable gate array, FPGA) or another programmable logic device, a transistor logic device, a hardware component, or any combination thereof.

An embodiment of this application provides a computer program product that includes instructions. When the instructions are run on a computer, the computer is enabled to perform any of the methods in the foregoing embodiments. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

It should be noted that all the foregoing components provided in embodiments of this application and configured to store the computer instructions or the computer program, such as, but not limited to the memory, the computer-readable storage medium, and a communication chip, are non-transitory (non-transitory).

In the process of implementing the claimed application, a person skilled in the art may understand and implement other variations in the disclosed embodiments by referring to the accompanying drawings, the disclosed content, and the appended claims. In the claims, "comprise (comprising)" does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, various modifications and combinations may be made to them without departing from the spirit and scope of this application. Correspondingly, the specification and accompanying drawings are merely example description of this application defined by the appended claims, and are considered to have covered any of or all modifications, variations, combinations or equivalents within the scope of this application.

## Claims

1. A data processing method, applied to a computer system, wherein the computer system comprises an internal memory and an external memory, and the method comprises:
receiving a write request, wherein the write request is for requesting to write, to the external memory, first data in a first storage area in the internal memory;
writing the first data to a second storage area in the internal memory, wherein the second storage area is a storage area, in the internal memory, that is reallocated to the first data, and the second storage area is different from the first storage area;
sending a response message after the first data is written to the second storage area, wherein the response message indicates that processing of the write request is completed; and
writing the first data in the second storage area to the external memory.

2. The method according to claim 1, wherein after the writing the first data to a second storage area in the internal memory, the method further comprises:
adding the write request to a first transaction, wherein the first transaction is a transaction allocated after a first flush command is received and before a second flush command is received, the first flush command is a flush command last received before the write request, and the second flush command is a flush command first received after the write request; and
the writing the first data in the second storage area to the external memory comprises:
writing data corresponding to all write requests in the first transaction to the external memory, wherein the data corresponding to all the write requests in the first transaction comprises the first data.

3. The method according to claim 2, wherein the writing data corresponding to all write requests in the first transaction to the external memory comprises:
combining the first data and data that is in the data corresponding to all the write requests comprised in the first transaction and whose current storage address is adjacent to a current storage address of the first data, and writing combined data to the external memory.

4. The method according to claim 2 or 3, wherein the method further comprises:
writing data corresponding to all write requests in a second transaction to the external memory after the writing data corresponding to all write requests in the first transaction to the external memory, wherein
the second transaction is a transaction allocated after the second flush command is received and before a third flush command is received, and the third flush command is a flush command first received after the second flush command is received.

5. The method according to any one of claims 1 to 4, wherein the writing the first data in the second storage area to the external memory comprises:
writing the first data in the second storage area to the external memory by using an asynchronous writeback thread.

6. A computer system, wherein the computer system comprises a receiving unit, a processing unit, a sending unit, an internal memory, and an external memory, wherein
the receiving unit is configured to receive a write request, wherein the write request is for requesting to write, to the external memory, first data in a first storage area in the internal memory;
the processing unit is configured to write the first data to a second storage area in the internal memory, wherein the second storage area is a storage area, in the internal memory, that is reallocated to the first data, and the second storage area is different from the first storage area;
the sending unit is configured to send a response message after the first data is written to the second storage area, wherein the response message indicates that processing of the write request is completed; and
the processing unit is further configured to write the first data in the second storage area to the external memory.

7. The computer system according to claim 6, wherein
the processing unit is further configured to add the write request to a first transaction, wherein the first transaction is a transaction allocated after a first flush command is received and before a second flush command is received, the first flush command is a flush command last received before the write request, and the second flush command is a flush command first received after the write request; and
that the processing unit is further configured to write the first data in the second storage area to the external memory comprises:
the processing unit is further configured to write data corresponding to all write requests in the first transaction to the external memory, wherein the data corresponding to all the write requests in the first transaction comprises the first data.

8. The computer system according to claim 7, wherein that the processing unit is further configured to write data corresponding to all write requests in the first transaction to the external memory comprises:
the processing unit is further configured to: combine the first data and data that is in the data corresponding to all the write requests comprised in the first transaction and whose current storage address is adjacent to a current storage address of the first data, and write combined data to the external memory.

9. The computer system according to claim 7 or 8, wherein
the processing unit is further configured to write data corresponding to all write requests in a second transaction to the external memory after the data corresponding to all the write requests in the first transaction is written to the external memory, wherein
the second transaction is a transaction allocated after the second flush command is received and before a third flush command is received, and the third flush command is a flush command first received after the second flush command is received.

10. The computer system according to any one of claims 6 to 9, wherein that the processing unit is further configured to write the first data in the second storage area to the external memory comprises:
the processing unit is further configured to write the first data in the second storage area to the external memory by using an asynchronous writeback thread.

11. A computer-readable storage medium, wherein the computer-readable storage medium comprises instructions, and when the instructions are run on a computer, the computer performs the method according to any one of claims 1 to 5.

12. A chip, wherein the chip comprises a processing circuit and an interface, the processing circuit is configured to: invoke, from a storage medium, a computer program stored in the storage medium; and run the computer program, to perform the method according to any one of claims 1 to 5.

13. A data processing apparatus, wherein the apparatus comprises a processor and a memory, the memory stores instructions, and the processor is configured to invoke the instructions to perform the method according to any one of claims 1 to 5.

14. A computer system, wherein the computer system comprises a processor, an internal memory, and an external memory, and the processor is configured to perform the method according to any one of claims 1 to 5.
